# EUROPÄISCHE PATENTANMELDUNG

(11) **EP 3 330 231 A1**
(43) Veröffentlichungstag der Anmeldung: **06.06.2018**
(21) Anmeldenummer: 16202225.5
(22) Anmeldetag: 05.12.2016
(51) Int. Cl.: C02F 3/08, C02F 11/10, C10B 53/00, B01J 2/00, C02F 1/28, C02F 1/52, C02F 1/56, C02F 3/30, C02F 3/34, C02F 11/12, C12N 11/00

(54) **VERFAHREN ZUR BEHANDLUNG VON ABWASSER UND BEHANDLUNG VON AUS DER ABWASSER ERZEUGTEM SCHLAMM**

(71) Anmelder: TMC Holding B.V., 9571 TC 2e Exloermond (NL)
(72) Erfinder: KIMMICH, Susanne, 64409 Messel (DE); TIEMANN, Hans-Jürgen, 49777 Groß-Berßen (DE); TIEMANN, Andreas, 49777 Groß Berßen (DE); ALBERDING, Bernd, 49681 Garrel (DE)
(74) Vertreter: Quermann, Helmut

(57) **Zusammenfassung**

Die Erfindung betrifft ein Verfahren zur Behandlung von kommunalem, landwirt-schaftlichem oder industriellem Abwasser, wobei aus dem Abwasser erzeugter Schlamm entwässert wird.

Bei diesem Verfahren ist vorgesehen, dass aus dem Schlamm mittels Pyrolyse Pyrolysekohle erzeugt wird.

Es ist somit nicht erforderlich, Klärschlamm zu entsorgen.

## Beschreibung

Die Erfindung betrifft ein Verfahren zur Behandlung von kommunalem, landwirtschaftlichem oder industriellem Abwasser, wobei aus dem Abwasser anfallender Schlamm entwässert wird.

Zur Behandlung von solchem Abwasser ist es bekannt, über einen Zulauf zulaufendes Abwasser zunächst vorzuklären und dieses vorgeklärte Abwasser dann biologisch zu behandeln, insbesondere mechanisch-biologisch zu behandeln. Dieser biologischen Behandlung nachfolgend kann eine Nachklärung vorgesehen sein. Bei der Vorklärung, der biologischen Behandlung und der Nachklärung anfallender Schlamm wird einer anaeroben Schlammbehandlung unterzogen, bei Erzeugung von Biogas. Bei der anaeroben Schlammbehandlung anfallender Gärrest-Schlamm muss entsorgt werden (z.B. über Verbrennung) oder wird in das Biogassystem zurückgeführt.

Aufgabe der vorliegenden Erfindung ist es, ein Verfahren der eingangs genannten Art so weiterzubilden, dass bei diesem kein Schlamm, insbesondere kein bei der anaeroben Schlammbehandlung anfallender Schlamm entsorgt werden muss.

Gelöst wird die Aufgabe durch ein Verfahren, das die Merkmale des Patentanspruchs 1 aufweist.

Bei dem erfindungsgemäßen Verfahren zur Behandlung von kommunalem, landwirtschaftlichem oder industriellem Abwasser ist somit vorgesehen, dass aus dem Abwasser anfallender Schlamm entwässert wird und aus dem Schlamm mittels Pyrolyse Pyrolysekohle erzeugt wird.

Vorzugsweise wird aus der Pyrolysekohle Aktivkohle erzeugt.

Es ist somit nicht erforderlich, den bei der anaeroben Behandlung anfallenden Schlamm zu entsorgen, sondern es wird dieser Schlamm vielmehr aufgrund der Pyrolyse als Pyrolysekohle entweder aus dem Prozess ausgeschleust oder, zumindest teilweise, als Aktivkohle in den Prozess des Behandelns des Abwassers eingeschleust.

Vorzugsweise wird der Schlamm entwässert und anschließend getrocknet. Insbesondere ist vorgesehen, dass der Schlamm entwässert, getrocknet und anschließend pelletiert wird. Der getrocknete Schlamm bzw. pelletierte Schlamm wird, ggf. mit einem weiteren Co-Substrat bzw. Co-Substraten der Pyrolyse zugeführt. Vorzugsweise wird bei dem Verfahren zur Behandlung des Abwassers dieses auch biologisch behandelt, insbesondere mechanisch-biologisch behandelt. Hierbei ist insbesondere vorgesehen, dass das Abwasser unter Verwendung eines oder mehrerer in einem Becken befindlicher Rotationstauchkörper mit integrierter Belüftung mechanisch-biologisch behandelt wird.

Zur Entlastung der Kläranlage ist insbesondere vorgesehen, dass das Abwasser vorgeklärt wird. Es wird insbesondere vorgeklärtes Abwasser biologisch behandelt. Die Vorklärung erfolgt vorzugsweise mittels eines Separators. Vorteilhaft wird das Abwasser nachgeklärt. Insbesondere wird das biologisch behandelte Abwasser nachgeklärt. Rücklaufschlamm von der Nachklärung wird der biologischen Stufe, somit der Stufe, in der die biologische Behandlung des Abwassers erfolgt, zurückgeführt. Andererseits wird ein Teil dieses Rücklaufschlammes von der Nachklärung als sogenannter Überschussschlamm der anaeroben Schlammbehandlung zugeführt.

Ist eine anaerobe Schlammbehandlung vorgesehen, wird hierbei einerseits Gärrest-Schlamm für die Pyrolyse, andererseits Biogas erzeugt. Bei der anaeroben Behandlung des Schlamms werden bei der Vorklärung abgetrennter Schlamm, auch als Primärschlamm bezeichnet, und ggf. abgetrennte aufschwimmende Stoffe und/oder bei der biologischen Behandlung anfallender Überschussschlamm anaerob behandelt. Auch im Zusammenhang mit der anaeroben Schlammbehandlung kann dem dort befindlichen Schlamm ein Co-Substrat bzw. Co-Substrate zugeführt werden.

Vorzugsweise wird die bei der Pyrolyse erzeugte Pyrolysekohle, mit Heissdampf zu Aktivkohle aktiviert, für eine Mikrostoffentfernung, insbesondere in Form von Pulveraktivkohle, bei der biologischen Behandlung und/oder als separate Adsorptionsstufe wieder verwendet.

Bei der biologischen Behandlung des Abwassers können zusätzlich Biokatalysatoren eingesetzt werden.

Vorzugsweise wird bei der anaeroben Schlammbehandlung erzeugtes Biogas gereinigt. Hierbei wird gereinigtes Gas zur Wärme- und/oder Stromerzeugung verwendet. Bei der Reinigung anfallende Substrate werden gleichfalls der Pyrolyse zugeführt.

Insbesondere wird bei der Schlammentwässerung und/oder Schlammtrocknung und/oder Pyrolyse anfallendes Presswasser bzw. Brüden dem zu klärenden Abwasser beigemischt.

Für die Pelletierung kann nach Trocknung des Schlamms Presswasser der Schlammentwässerung zur Rückfeuchtung eingesetzt werden.

Das erfindungsgemäße Verfahren einschließlich dessen Weiterbildungen ermöglicht eine effiziente Abwasser- und Schlammbehandlung mit interner Kreislaufführung und Wiederverwendung des Schlamms. Dieses Verfahren ist insbesondere geeignet für den Aus- und Umbau von Kläranlagen zur Behandlung von kommunalem, landwirtschaftlichem oder industriellem Abwasser. Es werden Verfahrenskomponenten der Vorklärung, Biologie, Biokatalysatoren, anaeroben Schlammbehandlung mit Biogasnutzung, Pyrolyse und Aktivkohleadsorption zu einer effizienten Abwasser- und Schlammbehandlung mit interner Kreislaufführung kombiniert.

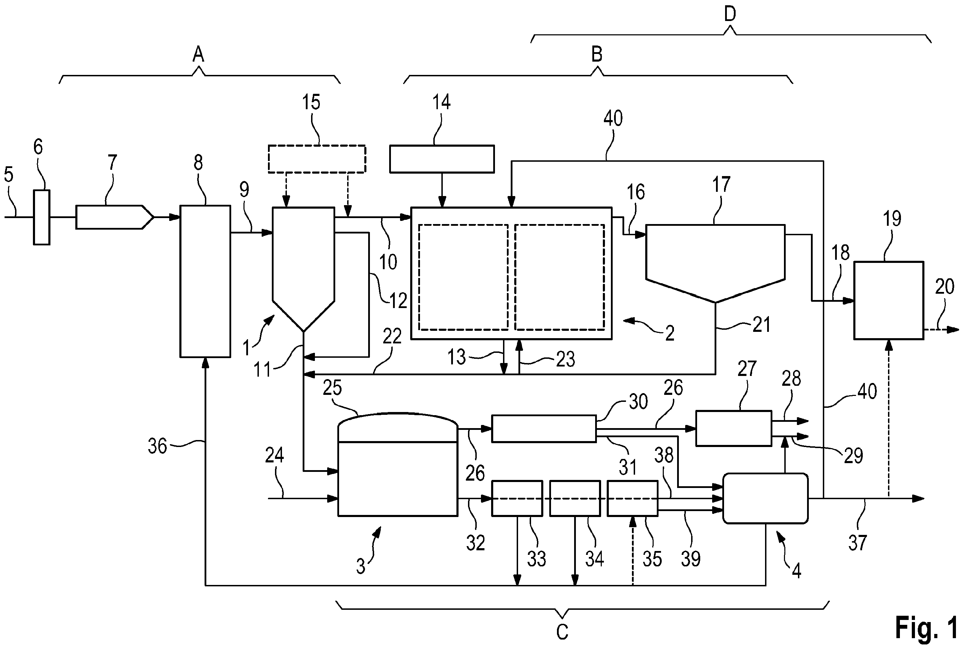

Nachfolgend ist ein bevorzugtes Ausführungsbeispiel der Erfindung anhand eines Diagramms gemäß Figur 1 veranschaulicht, das das erfindungsgemäße Verfahren zur Behandlung von kommunalem, landwirtschaftlichem oder industriellem Abwasser nebst Weiterbildungen veranschaulicht. Das gezeigte Verfahren ermöglicht eine effiziente Abwasser- und Schlammbehandlung mit interner Kreislaufführung und Wiederverwendung des Schlamms. Die Erfindung ist nicht auf dieses Ausführungsbeispiel beschränkt.

### 1. Vorklärung

Zur Entlastung einer Kläranlage wird eine Vorklärung A bei Verwendung eines Separators 1 eingesetzt, dessen Beschickung von oben oder von unten erfolgen kann, der aber eine größere Höhe als Breite aufweist, insbesondere ein Höhen-zu-Breiten-Verhältnis von 3 : 1.

Hierdurch werden die Zulaufkonzentration bzw. Frachten zur biologischen Stufe gezielt gesteuert und der biologischen Stufe genau das an Frachten zugeführt, das für die jeweils geforderte Elimination der Kohlenstoffe- und Nährstoffe erforderlich ist. Zum Beispiel kann für eine weitergehende Nährstoffelimination ein Verhältnis der Zulaufkonzentrationen von 25 : 5 : 1 bezüglich Kohlenstoff : Stickstoff : Phosphor eingestellt werden.

Der bei der Separation abgetrennte energiereiche Primärschlamm und aufschwimmende Stoffe (wie Fette, Öle, Schwimmschlamm) werden, zusammen mit dem Überschussschlamm der nachfolgenden biologischen Stufe 2, einem Anaerobreaktor 3 zugeführt, zur Biogaserzeugung und Weiterbehandlung des Gärrest-Schlamms mittels einer Pyrolyseeinrichtung 4 zur energetischen und stofflichen Nutzung des anaerob behandelten Schlamms.

Hierbei stellt der Separator 1 die Vorrichtung zur mechanischen Abtrennung von festen Partikeln aus Flüssigkeiten dar. Der Separator 1 übernimmt in der Abwasserbehandlung die gesamte Vorklärung bzw. Fest-/Flüssigtrennung und kann im Bereich des häuslichen Abwassers Sandfang-, Fettfang- sowie die platzintensiven Absetzbecken ersetzen.

Der Separator zeichnet sich durch eine Effizienz von bis zu 99 Prozent bei der Abtrennung von organischen und anorganischen Feststoffen (Teilchengröße ≥ 15 µm, abhängig von der Abwasserherkunft) aus.

Der Separator wird je nach Anwendungszweck von oben (insbesondere kommunaler Einsatz) oder unten (insbesondere industrieller Einsatz) mit Abwasser beschickt. Das Wasser wird auf eine strömungsoptimierte Einlaufform geleitet. Die Form des Einlaufs bewirkt, dass sich schwerere und zumeist anorganische Partikel absetzen. Die leichten, feineren (organischen) Partikel bewegen sich aufwärts in eine durch die Partikel selbst entstehende Filterschicht. Diese Filterschicht bildet sich aufgrund einer besonderen Separator-Geometrie aus. Die kleineren Partikel agglomerieren sich zusammen zu größeren Flocken und setzen sich ab. Das so filtrierte Wasser steigt weiter auf und fließt ab. Die abgetrennten Partikel (Schlamm) sammeln sich im Konus des Separators und werden periodisch durch eine verschließbare Öffnung abgezogen. Dieser Prozess liefert einen sehr hohen Reinigungsgrad des Klarwassers und führt gleichzeitig zu einer Eindickung des Schlamms. Der Schlamm wird nachfolgend in der anaeroben Vergärung weiterbehandelt. Das vorgereinigte Abwasser fließt am Kopf des Separators nach Durchlaufen einer Tauchwand-Überfallwehrkombination ab und der biologischen Stufe zu.

Im Vergleich zur traditionellen Vorklärung, zum Beispiel Absetzbecken, ermöglicht die Separatortechnologie eine energieeffizienten Vorklärung und damit Reduktion der Investitions- und Betriebskosten der gesamten Kläranlage.

Veranschaulicht ist zur Vorklärung A des Weiteren ein Zulauf 5, ein Rechen 6, ein Sand/Fettfang 7 und eine Einrichtung 8, die im Gesamtprozess einen Mengen- und Frachtausgleich ermöglicht. Von dort führt ein Zulauf 9 zum Separator 1.

Optional kann eine Dosierung mit chemischen Hilfsmitteln 15 (Fällmittel, Flockungshilfsmitteln, Koagulanten) unmittelbar im Bereich des Zulaufs 9 des Separators 1 oder in einer vom Separator 1 abgehenden Zulaufleitung 10 zur biologischen Stufe 2 vorgesehen sein. Durch diesen Zulauf 10 gelangt das Klarwasser zur biologischen Stufe 2. Der Ablauf, durch den der Schlamm über eine Schieberöffnung des Separators 1 diesen verlässt, ist mit der Bezugsziffer 11 bezeichnet. In diesen Ablauf 11 mündet ein Ablauf 12, durch den aus dem oberen Bereich des Separators 1 die aufsteigenden leichten, feineren Partikel, beispielsweise Fett, abgeführt werden. Der Ablauf 11 stellt den Zulauf zum Anaerobreaktor 3 dar.

### 2. Biologische Behandlung

Diese biologische Behandlung erfolgt in der biologischen Stufe 2 im Rotationstauchkörperverfahren. Es handelt sich um eine weitergehende biologische Abwasserbehandlung (Belebungs- und Festbettverfahren mit simultaner Stickstoff- und Phosphorelimination) durch Rotationstauchkörper-/Belüftungseinheit in der Bio-Stufe. Durch den Einsatz dieser Verfahrenseinheit kann das Anlagevolumen der Bio-Stufe auf ca. 50 Prozent des klassischen Belebtschlammverfahrens reduziert werden, bei gleichzeitiger erhöhter Leistungsfähigkeit (durch den Einsatz von Belebtschlamm und Festbettbiologie) und deutlich (bis zu 50 Prozent) reduziertem Energiebedarf.

Der Belebtschlamm kann durch direkt angeschlossene Nachklärtaschen oder eine klassische separate Nachklärung über Schwerkraft und/oder über Membranverfahren abgetrennt werden. Ein Ablauf der biologischen Stufe 2 ist mit der Bezugsziffer 13 bezeichnet.

Die Abwasserreinigung mit dem Rotationstauchkörperprinzip mit integrierter Belüftung erfolgt zum einen durch den freischwebenden Belebtschlamm (suspendierte Biomasse), zum anderen durch festhaftende Mikroorganismen auf den rotierenden Tauchkörperbewuchsflächen (sessile Biomasse). Damit wird die Wirkung des Belebtschlammverfahrens mit der des Tauchkörperverfahrens in einer Verfahrenseinheit vereinigt. Wie bei einem konventionellen Belebungsbecken wird diese mit einer voll wirksamen Belebtschlammkomponente mit Schlammrückführung zur Aufkonzentrierung der Belebtschlammsuspension betrieben. Über die Leistungsfähigkeit des konventionellen Belebtschlammverfahrens hinaus wird durch die höhere Konzentration der Belebtschlammkomponente und durch die sessile Biomasse die Gesamtleistungsfähigkeit der Verfahrenseinheit deutlich vergrößert.

Grundsätzlich ist das Rotationstauchkörperverfahren mit integrierter Belüftung in der gleichen Weise und mit denselben Kombinationsmöglichkeiten wie ein Belebungsverfahren unter Berücksichtigung der wesentlich erhöhten Leistungsfähigkeit einzusetzen. Bei fachgerechter Auslegung wird eine weitestgehende simultane Nitrifikation, eine weitgehende simultane Denitrifikation sowie eine weitgehende biologische P-Eliminierung (ohne chemische Zusätze) erreicht.

Der Tauchkörper ist als Rad ausgebildet und wird über einen außenliegenden Antrieb in der Biostufe angetrieben. Durch die besondere geometrische Form des Tauchkörpers, der gleichzeitig als Bewuchsfläche dient, wird bei der Rotation Umgebungsluft zur maximalen Sauerstoffversorgung der Belebtschlammkomponente eingetragen. Die an der biologischen Abwasserreinigung maßgeblich beteiligte sessile Biomasse wird selbsttätig und optimal mit Luftsauerstoff während des Auftauchens der Tauchkörper und während der gesamten Umdrehung des Rads durch die zwangsgeführte und zunehmend komprimierte Luft ohne zusätzlichen Energieaufwand versorgt. Der Tauchkörper ist damit gleichzeitig ein leistungsfähiges Sauerstoffeintragungsaggregat bei geringem Energieeinsatz.

### 3. Biokatalysatoren

Für die Verbesserung der Sauerstofftransmissionsraten und zusätzlich für einen beschleunigten Zellaufschluss und damit Reduzierung des Anlagenvolumens werden Biokatalysatoren 14 in der biologischen Stufe 2 eingesetzt. Die Biokatalysatoren werden im Zulauf zum biologischen System zugesetzt und verteilen sich durch das Rotationstauchkörperverfahren gleichmäßig im gesamten Bioreaktor. Biokatalysatoren zeichnen sich in aller Regel dadurch aus, dass sie keine Bakterien enthalten sowie völlig ungiftig (rein biologisch) und biologisch abbaubar sind. Biokatalysatoren basieren auf einem Fermentationsrückstand aus Pflanzen und Mineralien. Dieser Wirkstoff wird mit oberflächenmodifizierenden Komponenten gemischt und ist dadurch ein sehr leistungsfähiges, flüssiges Konzentrat. Im Wasser bildet es ultrafeine Mikroblasen, die dadurch chemische und biologische Reaktionen sehr stark beschleunigen.

Aufgrund der Katalyse ist der Energiebedarf für biologische Reaktionen verringert und es ergibt sich ein reduzierter Zeitbedarf durch Beschleunigung des Abbauprozesses gegenüber der Natur um einen Faktor durchaus im Bereich von 100. Infolge der Solubilisierung wird die Zellstruktur von organischen Abfällen gelöst und hierdurch die höhere Gastransferrate bzw. Sauerstofftransferrate und der schnellere Abbau ermöglicht.

Biokatalysatoren ermöglichen einen hohen Komfort und eine Vielseitigkeit bei multiplen Anwendungen. Die Produkte sind eine Kombination aus mehreren katalytischen Wirkelementen und bieten daher einen hohen Grad an flexiblen Einsatzmöglichkeiten.

Biokatalysatoren ermöglichen es, den Energieverbrauch in Kläranlagen um bis zu 40 Prozent und die Schlammentsorgung um bis zu 30 Prozent zu reduzieren. Gleichzeitig sind Geruchsemissionen weitgehend eliminiert. Biokatalysatoren wirken unmittelbar nach dem Einsatz, womit innerhalb von wenigen Tagen gute Ergebnisse hinsichtlich Geruch- und Schaumeliminierung sowie energieoptimierter Belüftung erreicht werden.

### 4. Nachklärung

Der Belebtschlamm kann entweder klassisch durch Sedimentation oder über Membranfiltration abgetrennt werden. Der abgetrennte Schlamm wird in die Biologie zurückgeführt, während das Klarwasser abläuft oder auch ggf. über eine weitere Filtration mit Aktivkohle von Mikroschadstoffen gereinigt wird.

Veranschaulicht ist ein Ablauf 16 von der biologischen Stufe 2 zur einem Nachklärbecken 17 und von dort der Ablauf 18 des Klarwassers, optional über einen Filter 19 für Aktivkohleadsorption. Das Reinwasser wird von dort über den Ablauf 20 abgeführt. Der sich im Nachklärbecken 17 unten ansammelnde Rücklaufschlamm wird durch den Ablauf 21 abgeführt und zusammen mit dem durch den Ablauf 13 von der biologischen Stufe 2 abgeführten Schlamm als Überschussschlamm durch den Ablauf 22 zum Ablauf 11 geführt oder vorher teilweise als Rücklaufschlamm der biologischen Stufe 2 über den Zulauf 23 zugeführt. Der Bereich der Komponenten, in dem die biologische Behandlung stattfindet, ist mit dem Buchstaben B veranschaulicht.

### 5. Anerobe Schlammbehandlung mit Biogaserzeugung

Durch den Ablauf 11 gelangt der vom Separator 1 ausgetretene Schlamm sowie die aus dem Separator 1 ausgegebenen leichten, feineren (organischen) Partikel, beispielsweise Fett, ferner der Überschussschlamm der biologischen Behandlung zum Anaerobreaktor 3, wobei diesem auch über den Zulauf 24 Co-Substrate zugeführt werden können. Im Anaerobreaktor 3 wird Biogas erzeugt und über einen Biogassspeicher 25 Biogas über eine Leitung 26 einem Blockheizkraftwerk 27 zugeführt, zur Erzeugung von Strom gemäß Ausgang 28 und Wärme gemäß Ausgang 29. Zwischen Biogasspeicher 25 und Blockheizkraftwerk 27 ist eine Biogasreinigung 30 vorgesehen. Es wird somit Energie durch Einsatz der anaeroben Schlammfaulung mit Generation von Biogas erzeugt. Durch den Einsatz der anaeroben Schlammfaulung wird der Schlamm zudem stabilisiert.

Als Anaerobreaktoren werden vorzugsweise Reaktortypen aus der Landwirtschaft eingesetzt, zum Beispiel Rührreaktoren oder auch Pfropfenstromfermenter.

Bei der Biogasreinigung 30 abgetrennte Feststoffe werden über eine Leitung 31 der Pyrolyseeinrichtung 4 zugeführt.

### 6. Weitere Schlammbehandlung durch Entwässerung, Trocknung und ggf. Pelletierung

Bei der anaeroben Schlammbehandlung fällt neben dem Biogas Gärrest-Schlamm an, der durch die Leitung 32 aus dem Anaerobreaktor 3 ausgegeben wird.
Aus dem Gärrest-Schlamm kann optional Phosphor zurückgewonnen werden, z.B. auf chemischem Weg, insbesondere durch Einsatz von Kohlensäure.
Dieser Schlamm durchläuft zunächst eine Schlammentwässerung 33, dann eine Schlammtrocknung 34, schließlich ggf. eine Schlammpelletierung 35. Bei der Schlammentwässerung und der Schlammtrocknung anfallendes Presswasser wird über einen Zulauf 36 zwecks Mengen- und Frachtausgleich stromaufwärts des Separators 1 der Einrichtung 8 zugeführt. Der pelletierte Schlamm wird gemäß Darstellung des Pfeils 38 der Pyrolyseeinrichtung 4 zugeführt. Ferner werden Co-Substrate 39 der Pyrolyseeinrichtung 4 zugeführt.

Für die Schlammentwässerung und -trocknung können die unterschiedlichsten Techniken wie Schneckenpressen, Kammerfilter, Bandfilter usw. sowie Wirbelschichtöfen, Trocknungsschnecken usw. eingesetzt werden.

Wichtig ist jedoch in allen Fällen die Steuerung der Zulaufkonzentrationen bzw. Frachten durch gezielte, kontinuierliche Presswasserrückführung in den Zulauf der Biologie über den Fracht - und Mengenausgleich.

Bei Einsatz einer Pelletierung wird teilweise das Presswasser der Entwässerung zur Befeuchtung der Pelletierung eingesetzt.

### 7. Pyrolyse/Vergasung

Der anaerob behandelte, entwässerte, getrocknete und ggf. pelletierte Klärschlamm wird in der Pyrolyseeinrichtung 4 zu Pyrolysekohle umgesetzt, die nach Aktivierung für die Mikrostoffentfernung wiederverwendet werden kann. In der PyrolyseEinrichtung wird aus dem Klärschlamm hochwertige Pyrolysekohle erzeugt, die nach Aktivierung mit z.B. Heissdampf als Adsorptionsmedium für die Entfernung von Mikroverunreinigungen aus dem Abwasser wiederverwendet werden kann. Zum anderen kann sie als hochwertiger Dünger oder Bodenverbesserer eingesetzt werden. Veranschaulicht sind in diesem Zusammenhang ein Ausgang 37 für Pyrolysekohle bzw. Aktivkohle von der Pyrolyseeinrichtung 4, ein Ausgang 40 von der Pyrolyseeinrichtung 4 zwecks Pulver-Aktivkohledosierung in der biologischen Stufe 2. Ein Teil der durch den Ausgang 37 ausgegebenen Aktivkohle kann dem Filter 19 für Aktivkohle-Adsorption zugeführt werden.

Bei der Pyrolyse anfallendes Brüden wird über den Zulauf 36 abgeführt. Bei der Pyrolyse entstehende Wärme wird über den Ausgang 29 abgeführt.

Die Pyrolyse-Vergasung stellt eine thermo-chemische Spaltung organischer Verbindungen dar, die durch hohe Temperaturen (200 bis 900 °C) einen Bindungsbruch innerhalb großer Moleküle erzwingt, womit kleinere Moleküle entstehen. Dies geschieht ausschließlich unter Einwirkung von hoher Temperatur und ohne zusätzlich zugeführten Sauerstoff.

Die Bezeichnung Pyrolyse wird für Vorgänge verwendet, bei denen neben den mineralischen Bestandteilen des Einsatzstoffes auch fester Kohlenstoff zurückbleibt. Dieser wird bei entsprechendem Kohlenstoffgehalt auch als Pyrolysekoks und nach Aktivierung als Aktivkohle bezeichnet.

Durch die Pyrolyse wird ein Produkt zur internen Wiederverwertung bzw. zum Verkauf geschaffen. Die Kosten für die Klärschlammentsorgung entfallen damit komplett.

Der Bereich der Schlammbehandlung mit Schlamm- und Biogasnutzung ist durch den Bereich C gekennzeichnet.

### 8. Mikroschadstoffentfernung

Für die Entfernung der Mikrostoffe können verschiedene Verfahren zum Einsatz kommen: Aktivkohleadsorption, Oxidations- (z. B. mit Ozon) sowie Filtrationsverfahren.

Die bei der Pyrolyse erzeugte Pyrolysekohle bzw. Aktivkohle wird für die Entfernung von Mikrospurenstoffen aus dem Abwasser weiterverwendet.

Dies kann zum einen in Form von Pulveraktivkohle erfolgen, die über die Leitung 40 direkt der Biologie, konkret der biologischen Stufe 2, zugeführt und mit dem Belebtschlamm aus dem System wieder abgetrennt wird oder zum anderen der separate Adsorption/Filtrationseinheit 19 im Ablauf der Kläranlage zugeführt wird.

Der Bereich der Mikrostoffentfernung ist durch den Bereich D gekennzeichnet.

Bei den Mikroverunreinigungen handelt es sich um Spurenstoffe mit Problempotenzial. Mikroverunreinigungen sind organische Spurenstoffe, die in Gewässern in niedrigen Konzentrationen vorkommen (Nano- bis Mikrogramm pro Liter). Beispiele sind Rückstände von Medikamenten, Pflanzenschutzmitteln, Pflegeprodukten oder Haushaltschemikalien. Diese Stoffe werden zu einem großen Teil über das Abwasser in die Gewässer eingetragen. Solche Mikroschadstoffe können verfahrensgemäß sicher entfernt werden.

Die schematische Darstellung gemäß Fig. 1 veranschaulicht somit ein Verfahren mit Verfahrenskomponenten der Vorklärung, Biologie, Biokatalysatoren, anaeroben Schlammbehandlung mit Biogasnutzung, Pyrolyse und Aktivkohleadsorption, die zu einer effizienten Abwasser- und Schlammbehandlung mit interner Kreislaufführung kombiniert sind. Das Verfahren dient der Behandlung von kommunalem, landwirtschaftlichem oder industriellem Abwasser. Insbesondere ist das Verfahren beim Aus- und Umbau von Kläranlagen von Interesse. Es können durchaus auch Abwässer aus dem Bereich der Tierverarbeitung behandelt werden.

## Patentansprüche

1. Verfahren zur Behandlung von kommunalem, landwirtschaftlichem oder industriellem Abwasser, wobei aus dem Abwasser erzeugter Schlamm entwässert wird, **dadurch gekennzeichnet, dass** aus dem Schlamm mittels Pyrolyse Pyrolysekohle erzeugt wird.

2. Verfahren nach Anspruch 1, **dadurch gekennzeichnet, dass** der Schlamm entwässert und anschließend getrocknet wird, insbesondere entwässert, getrocknet und anschließend pelletiert wird.

3. Verfahren nach Anspruch 1 oder 2, **dadurch gekennzeichnet, dass** das Abwasser biologisch behandelt wird, insbesondere mechanisch-biologisch behandelt wird.

4. Verfahren nach Anspruch 3, **dadurch gekennzeichnet, dass** das Abwasser unter Verwendung einer oder mehrerer in einem Becken befindlicher Rotationstauchkörper mit integrierter Belüftung mechanisch-biologisch behandelt wird.

5. Verfahren nach einem der Ansprüche 1 bis 4, **dadurch gekennzeichnet, dass** das Abwasser vorgeklärt wird, insbesondere vorgeklärtes Abwasser biologisch behandelt wird.

6. Verfahren nach Anspruch 5, **dadurch gekennzeichnet, dass** die Vorklärung mittels eines Separators erfolgt.

7. Verfahren nach einem der Ansprüche 1 bis 6, **dadurch gekennzeichnet, dass** der Schlamm anaerob behandelt wird, bei Erzeugung von Gärrest-Schlamm für die Pyrolyse und von Biogas.

8. Verfahren nach einem der Ansprüche 1 bis 7, **dadurch gekennzeichnet, dass** bei der Vorklärung abgetrennter Schlamm und ggf. abgetrennte aufschwimmende Stoffe und/oder bei der biologischen Behandlung anfallender Überschussschlamm anaerob behandelt wird bzw. werden.

9. Verfahren nach einem der Ansprüche 1 bis 8, **dadurch gekennzeichnet, dass** aus der Pyrolysekohle Aktivkohle erzeugt wird, insbesondere Pyrolysekohle mit Heißdampf zu Aktivkohle aktiviert wird.

10. Verfahren nach Anspruch 9, **dadurch gekennzeichnet, dass** die Aktivkohle für eine Mikrostoffentfernung, insbesondere in Form von Pulveraktivkohle bei der biologischen Behandlung und/oder als separate Adsorptionsstufe wieder verwendet wird.

11. Verfahren nach einem der Ansprüche 1 bis 10, **dadurch gekennzeichnet, dass** bei der biologischen Behandlung des Abwassers Biokatalysatoren eingesetzt werden.

12. Verfahren nach einem der Ansprüche 1 bis 11, **dadurch gekennzeichnet, dass** bei der anaeroben Schlammbehandlung erzeugtes Biogas gereinigt wird, wobei gereinigtes Biogas zur Wärme- und/oder Stromerzeugung verwendet wird, und bei der Reinigung anfallende Substrate der Pyrolyse zugeführt werden.

13. Verfahren nach einem der Ansprüche 1 bis 12, **dadurch gekennzeichnet, dass** bei der Schlammentwässerung und/oder Schlammtrocknung und/oder Pyrolyse anfallendes Presswasser bzw. Brüden dem zu klärenden Abwasser beigemischt wird.

14. Verfahren nach einem der Ansprüche 1 bis13, **dadurch gekennzeichnet, dass** für die Pelletierung, nach Trocknung des Schlamms, Presswasser der Schlammentwässerung zur Rückfeuchtung eingesetzt wird.

15. Verfahren nach einem der Ansprüche 1 bis14, **dadurch gekennzeichnet, dass** aus dem Gärrest-Schlamm Phosphor zurückgewonnen wird, vorzugsweise chemisch, insbesondere durch Einsatz von Kohlensäure zurückgewonnen wid.
